# EUROPEAN PATENT APPLICATION

(11) **EP 3 338 890 A2**
(43) Date of publication of application: **27.06.2018**
(21) Application number: 17194113.1
(22) Date of filing: 29.09.2017
(51) Int. Cl.: B01L 3/02, B01L 3/00

(54) **LIQUID STORAGE CONTAINER AND PRE-TREATMENT EQUIPMENT USING THE LIQUID STORAGE CONTAINER**

(30) Priority: 26.12.2016 JP 2016006177 U
(71) Applicant: Shimadzu Corporation, Kyoto 604-8511 (JP)
(72) Inventor: Hanafusa, Nobuhiro, Kyoto-shi, Kyoto 604-8511 (JP)
(74) Representative: Kilian Kilian & Partner

(57) **Abstract**

A liquid storage container (2) includes : a container main body (4) having an opening on a top end surface and having a space (4a) for storing liquid therein; a septum (6) which encapsulates the opening on the top end surface of the container main body (4) and is made of an elastic material that is penetrable by a probe (127) to be inserted into the container main body (4) ; and a water absorptive member (8) having water absorptivity, which is provided directly above the septum (6) and absorbs water on an upper surface of the septum (6).

## Description

### BACKGROUND OF THE INVENTION

### 1. Field of the Invention

The present device relates to a liquid storage container for storing a reagent to be added to a sample in pre-treatment equipment which automatically performs pre-treatment such as extraction treatment for removing a specific component unnecessary for analysis and extracting a necessary component as a sample, among components contained in biologically derived specimens such as whole blood, a serum, blood plasma, blood in filter paper and urine, and further relates to pre-treatment equipment using the liquid storage container.

### 2. Description of the Related Art

When performing quantitative analysis of a sample such as a biological specimen, treatment for removing a specific component unnecessary for the analysis and extracting a necessary component as a sample from the biological specimen and exsiccation treatment for concentrating and exsiccating the extracted sample may be necessary to be carried out. As pre-treatment equipment for automatically performing such pre-treatment, various types have been suggested and used conventionally (see, for example JP 2010-60474 A).

Generally, the pre-treatment equipment performs operations of: collecting objective liquid from a container that stores a reagent or internal standard fluid by using a probe; and adding the liquid to a sample. The container that stores the reagent or the internal standard fluid is disposed at a predetermined position in the equipment, and a top surface of the container is encapsulated by a septum to prevent the reagent or the internal standard fluid stored therein from being vaporized and concentrated. For collecting the liquid in the container, since the septum is made of an elastic material having elasticity, the probe penetrates the septum so as to insert a tip of the probe into the container, thereby aspirating the internal liquid.

In the above-described pre-treatment equipment, an inner surface and an outer surface of the probe after dispensation of the liquid are washed, and water drops are attached to the outer surface of the probe after being washed. When the probe with water drops attached to its outer surface penetrates the septum on the top surface of the container in order to collect the reagent or the internal standard fluid, the water attached to the outer surface of the probe may be wiped with the septum so as to be accumulated on an upper surface of the septum. When the number of the dispensation by the probe reaches several tens to several hundred (the number of the penetration of the septum by the probe), an amount of the water accumulated on the upper surface of the septum becomes as much as several to several tens µL.

When the water is accumulated on the upper surface of the septum, the water enters the container via a slight gap which is generated between the septum and the probe when the probe penetrates the septum, thereby causing dilution and deterioration of the reagent or the internal standard fluid in the container, and further causing lowering of reproducibility or analytical precision of analytical data. In the case of making a cut into the septum for easy penetration by the probe, the water accumulated on the upper surface of the septum is further likely to enter the container.

### SUMMARY OF THE INVENTION

The present device, therefore, aims to prevent water attached to an outer surface of a probe from entering a liquid storage container, when collecting liquid by a probe from the liquid storage container with a top end surface encapsulated by a septum.

The liquid storage container according to the present device includes: a container main body which has an opening on a top end surface and includes a space for storing liquid therein; a septum which encapsulates the opening on the top end surface of the container main body and is made of an elastic material that is penetrable by a probe to be inserted into the container main body; and a water absorptive member having water absorptivity, which is provided directly above the septum and absorbs water on an upper surface of the septum.

The water absorptive member is preferably provided to surround a part of the septum where the probe penetrates. Thereby, water wiped with the septum when the probe penetrates the septum and are accumulated on the septum can be absorbed effectively by the water absorptive member around the water.

A specific structure of the water absorptive member in the above-described case may be a structure, which has a through hole for allowing the probe inserted into the container main body to pass through at a central portion, or has a thickness that is penetrable by the probe.

As a material for the water absorptive member, any of filter paper, cotton, gauze and a polymer absorber can be exemplified. The "polymer absorber" may be, for example, sheet-shaped.

In a preferable embodiment of the liquid storage container of the present device, a cap which is installed on a top end portion of the container main body and holds the septum and the water absorptive member is further provided. Thereby, the septum and the water absorptive member can be held stably on the top surface of the container main body.

In the above-described embodiment, it is further preferable that the septum and the water absorptive member have outer diameters that are substantially equal to an outer diameter of the top end portion of the container main body. Since an inner diameter of the cap to be mounted on the top end portion of the container main body is substantially equal to the outer diameter of the top end portion of the container main body, if the outer diameters of the septum and the water absorptive member are made substantially equal to the outer diameter of the top end portion of the container main body, the outer diameters of the septum and the water absorptive member are also substantially equal to the inner diameter of the cap. Thus, the septum and the water absorptive member can be fit into the cap, and positions of the septum and the water absorptive member can be determined by an inner circumferential surface of the cap, thereby preventing positional displacement of the septum and the water absorptive member.

Herein, the case where the outer diameters of the septum and the water absorptive member are made substantially equal to the outer diameter of the top end portion of the container main body includes: a case where the outer diameters of the septum and the water absorptive member are perfectly equal to the outer diameter of the top end portion of the container main body; and a case where the outer diameters of the septum and the water absorptive member are slightly smaller than the outer diameter of the top end portion of the container main body. The case where the outer diameters of the septum and the water absorptive member are slightly smaller than the outer diameter of the top end portion of the container main body means that the outer diameters of the septum and the water absorptive member are smaller than the outer diameter of the top end portion of the container main body by an extent of not affecting encapsulation of the opening of the container main body or passage of the probe, even when the septum and the water absorptive member move within a range of the top end surface of the container main body.

A preferable embodiment of the cap is, for example, that the cap has an opening for allowing the probe inserted into the container main body to pass through, and a surrounding part of the opening is structured so as to be engaged with a peripheral portion of an upper surface of the water absorptive member.

The pre-treatment equipment according to the present device is the above-described liquid storage container including: a liquid storage container installing portion for installing the liquid storage container that stores liquid necessary for pre-treating a sample therein; a probe for aspirating and dispensing the liquid from its tip; a probe driving mechanism which drives the probe to collect the liquid necessary for the pre-treatment from the liquid storage container installed on the liquid storage container installing portion by using the probe; and pre-treatment portions for pre-treating a sample to which the liquid necessary for the pre-treatment is added by the probe.

Since the liquid storage container of the present device is provided with the water absorptive member which absorbs water on the upper surface of the septum just above the septum, the water absorptive member can absorb the water accumulated on the upper surface of the septum by the penetration of the septum by the probe having wash water attached to its outer surface. Thereby, the water can be prevented from being accumulated on the upper surface of the septum, and thus, can be prevented from entering the container main body via the gap generated when the probe penetrates the septum.

Since the pre-treatment equipment of the present device adopts the above-described liquid storage container as a container for storing the liquid necessary for pre-treating the sample, water is not likely to be accumulated on the upper surface of the septum that encapsulates the top surface of the liquid storage container, thereby hardly causing a problem that the water on the septum enters the liquid storage container so as to dilute or deteriorate the liquid necessary for pre-treating the sample. Thereby, lowering of reproducibility or analytical precision of analytical data can be suppressed.

### BRIEF DESCRIPTION OF THE DRAWINGS

FIG. 1 is a cross-sectional view showing an example of a liquid storage container;
FIG. 2 is a cross-sectional view showing an example of a state before inserting a probe into the liquid storage container;
FIG. 3 is a cross-sectional view showing an example of a state where the probe is inserted into the liquid storage container; and
FIG. 4 is a plan view showing an example of pre-treatment equipment.

### DETAILED DESCRIPTION OF THE INVENTION

Hereinafter, an example of a liquid storage container according to the present device and pre-treatment equipment using the liquid storage container will be described with reference to the drawings.

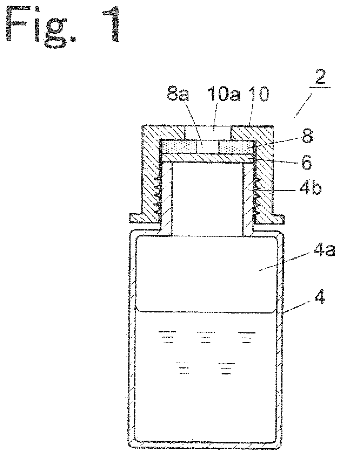

Firstly, a structure of an example of the liquid storage container will be described with reference to FIG. 1.

A liquid storage container 2 in this example includes a container main body 4, a septum 6, a water absorptive member 8, and a cap 10. The container main body 4 has an opening on its top end surface, and has a space 4a for storing liquid therein. The cap 10 is attached to a top end portion 4b of the container main body 4 so as to cover the top end portion 4b of the container main body 4 from above in a state where the septum 6 and the water absorptive member 8 are put on a top end surface of the container main body 4. That is, the septum 6 and the water absorptive member 8 are held on the top end surface of the container main body 4 by the cap 10.

Since an outer peripheral surface of the top end portion 4b of the container main body 4 and an inner peripheral surface of the cap 10 are provided with screws that are screwed with each other, the cap 10 can be attached to the top end portion 4b of the container main body 4 by fitting the top end portion 4b into a hollow of a lower surface of the cap 10 and rotating the container main body 4 and the cap 10 relatively.

Incidentally, the structure of attaching the cap 10 to the top end portion 4b of the container main body 4 is not limited to the screwing, but may be fixing the cap 10 with the top end portion 4b by engagement of a structure such as a protrusion and a groove provided to the top end portion 4b with a part of the cap 10.

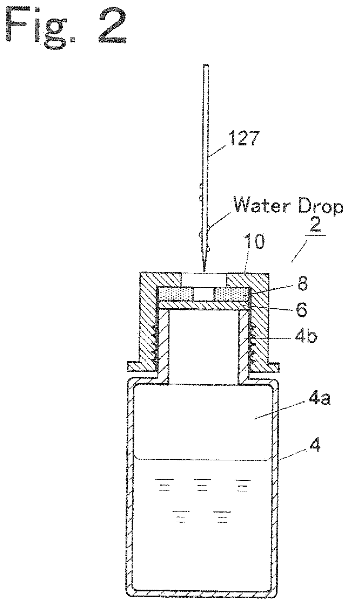

The opening on the top end surface of the container main body 4 is encapsulated by the septum 6. The septum 6 is made of an elastic material having elasticity such as silicone rubber, which can be penetrated by a probe 127 described below (see FIGS. 2 to 4). Due to the elasticity of the septum 6, a hole formed by the penetration by the probe 127 is closed after drawing the probe 127, whereby sealing of an internal space 4a of the container main body 4 can be maintained.

Directly above the septum 6, the water absorptive member 8 having water absorptivity, which is made of, for example, filter paper, cotton, gauze or a polymer absorber (which is, for example, sheet-shaped) is provided. In this example, a through hole 8a for allowing the probe 127 to pass through is provided at a central part of the water absorptive member 8. Herein, the through hole 8a is not necessarily provided, and the water absorptive member 8 having a thickness that is penetrable by the probe 127 may be adopted instead.

Outer diameters of the septum 6 and the water absorptive member 8 are substantially equal to an outer diameter of the top end portion 4b of the container main body 4. Since the outer diameter of the top end portion 4b of the container main body 4 is substantially equal to an inner diameter of the cap 10, the outer diameters of the septum 6 and the water absorptive member 8 are substantially equal to the inner diameter of the cap 10. Thereby, positions of the septum 6 and the water absorptive member 8 are determined by the cap 10.

The cap 10 is provided with an opening 10a for allowing the probe 127 (see FIGS. 2 to 4) to pass through. The opening 10a has an inner diameter that is larger than an outer diameter of the probe 127 and is smaller than the outer diameters of the septum 6 and the water absorptive member 8. Thereby, the lower surface inside the cap 10 is engaged with a peripheral portion of an upper surface of the water absorptive member 8 so as to prevent detachment of the septum 6 and the water absorptive member 8 from the top end surface of the container main body 4.

The water absorptive member 8 is provided in order to prevent water drops of wash water attached to an outer surface of the probe 127 from entering the internal space 4a of the container main body 4 when the probe 127 after being washed is inserted into the internal space 4a of the container main body 4, as shown in FIG. 2.

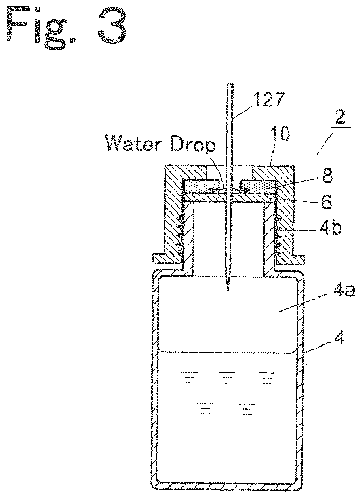

As shown in FIG. 3, while the probe 127 is penetrating the septum 6 and entering the internal space 4a of the container main body 4, the water drops attached to the outer surface of the probe 127 are wiped with the septum 6, and are accumulated on the upper surface of the septum 6. If the penetration of the septum 6 by the probe 127 is repeated in the state where such water drops are accumulated on the upper surface of the septum 6, the water accumulated on the upper surface of the septum 6 may enter the internal space 4a via a gap that is generated between the probe 127 and the septum 6 while the probe 127 penetrates the septum 6.

In this example, since the water absorptive member 8 is provided directly above the septum 6, water drops on the outer surface of the probe 127, which are wiped with the septum 6, are absorbed by the water absorptive member 8, whereby the accumulation of a large amount of water on the septum 6 can be prevented. Thereby, even if the penetration of the septum 6 by the probe 127 after being washed are repeated many times, the wash water is not likely to enter the internal space 4a of the container main body 4, so that the problem such as dilution and deterioration of a reagent or internal standard fluid stored in the internal space 4a can be prevented.

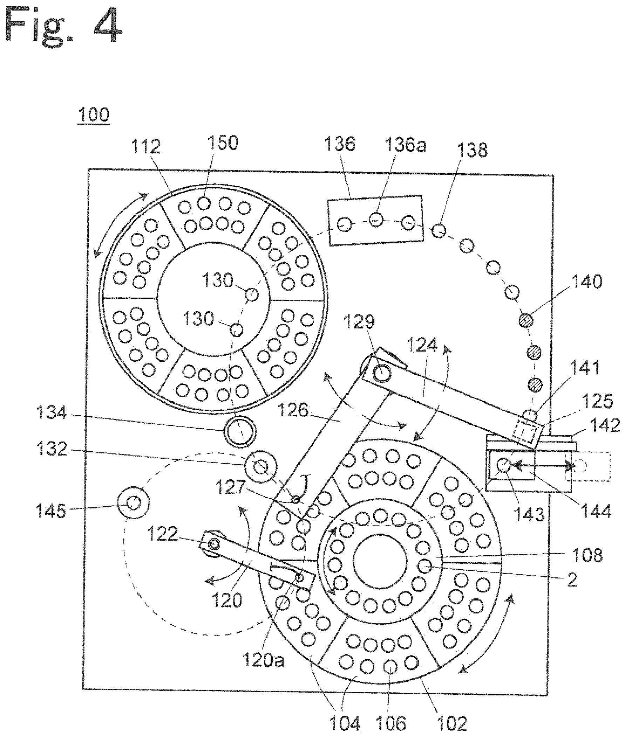

Next, an example of pre-treatment equipment using the above-described liquid storage container 2 will be described with reference to FIG. 4.

A pre-treatment equipment 100 in this example uses one pre-treatment container 150 for one sample so as to carry out a necessary pre-treatment item, respectively. The pre-treatment equipment 100 is provided with plural treatment ports for carrying out the pre-treatment items respectively, and a pre-treatment container that stores a sample is installed on any of the treatment ports, whereby the sample stored in that pre-treatment container is subjected to the pre-treatment item that corresponds to each of the treatment port.

The pre-treatment container 150 is conveyed by a conveying arm 124. The conveying arm 124 has a holding portion 125 for holding the pre-treatment container 150 on a tip side of the conveying arm 124, and the holding portion 125 is rotated around a vertical axis 129 that holds a base end portion of the holding portion 125 as a rotation center so as to draw an arc path within a horizontal plane. All of the treatment ports that are the destinations to convey the samples of the pre-treatment containers 150 and other ports are provided along the arc path drawn by the holding portion 125.

A sample installing portion 102 for installing sample containers 106 that store samples is provided, and a sampling arm 120 for collecting the samples from the respective sample containers 106 installed on the sample installing portion 102 is provided near the sample installing portion 102. Sample racks 104 for holding the plural sample containers 106 are installed circularly on the sample installing portion 102.

The sampling arm 120, whose base end portion is penetrated by a vertical axis 122 , is rotated around the axis 122 as a center within a horizontal plane, and moves upward and downward in a vertical direction along the axis 122. A sampling nozzle 120a is held on a tip side of the sampling arm 120 so that its tip may be directed vertically downward, and moves along an arc path within the horizontal plane and moves upward and downward in the vertical direction by the sampling arm 120.

A dispensing port 132 is provided at a position both on the path of the sampling nozzle 120a and on the path of the holding portion 125 of the conveying arm 124. The dispensing port 132 is a port for the sampling nozzle 120a to dispense samples to the pre-treatment containers 150.

Inside the sample installing portion 102, a reagent installing portion 108 (liquid storage container installing portion) for installing the liquid storage container 2, which is described above with reference to FIGS. 1 to 3, as a reagent container is provided. A reagent arm 126 (probe driving mechanism) for collecting reagents from the liquid storage containers 2 installed on the reagent installing portion 108 is provided. The reagent arm 126, whose base end is supported by the vertical axis 129 that is common with the conveying arm 124, is rotated within the horizontal plane and moves upward and downward. A probe 127 is provided to a tip portion of the reagent arm 126. The probe 127, which is provided so that its tip may be directed vertically downward, moves along an arc path in the same way as that of the holding portion 125 of the conveying arm 124 within the horizontal plane and moves upward and downward.

The reagent installing portion 108 is rotated within the horizontal plane independently from the sample installing portion 102. On the reagent installing portion 108, the plural liquid storage containers 2 are arranged circularly, and are conveyed by the rotation of the reagent installing portion 108 in its rotation direction, whereby the desired liquid storage container 2 can be disposed at a predetermined reagent collecting position. The reagent collecting position is a position along the path of the probe 127 of the reagent arm 126, where the probe 127 collects the reagent. After aspirating the predetermined reagent, the probe 127 dispenses the aspirated reagent to the pre-treatment container 150 installed on the dispensing port 132 so as to add the reagent to the sample.

At a position different from those of the sample installing portion 102 and the reagent installing portion 108, a pre-treatment container installing portion 112 is provided. The pre-treatment container installing portion 112 installs the unused pre-treatment containers 150 circularly. The pre-treatment container installing portion 112 is rotated within the horizontal plane so as to move the pre-treatment containers 150 in a circumferential direction, thereby arranging an arbitrary pre-treatment container at a position along the path of the holding portion 125 of the conveying arm 124. The conveying arm 124 can hold the unused pre-treatment container 150 that is arranged at the position along the path of the holding portion 125.

As ports of a pre-treatment portion for storing the pre-treatment containers 150 so as to carry out specific pre-treatment items, filtering ports 130, stirring ports 136a and temperature control ports 138 and 140 are provided.

The filtering port 130 is structured to add negative pressure to the pre-treatment containers 150 installed on the filtering ports 130. The filtering port 130 constitutes a pre-treatment portion for filtrating a sample as the pre-treatment. A stirring portion 136 also constitutes the pre-treatment portion. The stirring portion 136 has a mechanism for operating the respective stirring ports 136a individually and periodically within the horizontal plane so as to stir sample solution in the pre-treatment containers 150 arranged on the respective stirring ports 136a.

This pre-treatment equipment 100 is provided with a sample transfer device 142 for transferring a pre-treated sample toward a sample injection device (for example, an auto-sampler or the like) that is arranged adjacently to this pre-treatment equipment 100 in a case side edge portion. The sample transfer device 142 is provided with a move portion 144 which moves in one direction (a direction shown by an arrow in FIG. 4) within the horizontal plane by a driving mechanism having a rack and pinion mechanism. On an upper surface of the move portion 144, a transfer port 143 for installing the pre-treatment container 150 that stores an extracted sample is provided.

At a position near the dispensing port 132 along the path of the holding portion 125 of the conveying arm 124, a disposal port 134 for disposing the used pre-treatment container 150 is provided. Further, at a position along the path of the sampling nozzle 120a, a washing port 145 for washing the sampling nozzle 120a is provided. At a position along the path of the probe 127, a washing port for washing the outer surface and an inner surface of the probe 127, which is not illustrated, is provided.

## Claims

1. A liquid storage container (2) comprising:
a container main body (4) which has an opening on a top end surface and includes a space (4a) for storing liquid in the container main body;
a septum (6) which encapsulates the opening on the top end surface of the container main body (4) and is made of an elastic material that is penetrable by a probe (127) to be inserted into the container main body (4); and
a water absorptive member (8) having water absorptivity, which is provided directly above the septum (6) and absorbs water on an upper surface of the septum (6).

2. The liquid storage container (2) according to Claim 1, wherein the water absorptive member (8) is provided to surround a part of the septum (6) where the probe penetrates (127).

3. The liquid storage container (2) according to Claim 1 or 2, wherein the water absorptive member (8) has a through hole (8a) for allowing the probe (127) inserted into the container main body (4) to pass through at a central portion, or has a thickness that is penetrable by the probe (127).

4. The liquid storage container (2) according to any one of Claims 1 to 3, wherein the water absorptive member (8) is made of any of filter paper, cotton, gauze, and a polymer absorber.

5. The liquid storage container (2) according to any one of Claims 1 to 4, further comprising a cap (10) which is installed on a top end portion (4b) of the container main body (4) and holds the septum (6) and the water absorptive member (8).

6. The liquid storage container (2) according to Claim 5, wherein the septum (6) and the water absorptive member (8) have outer diameters that are substantially equal to an outer diameter of the top end portion (4b) of the container main body (4).

7. The liquid storage container (2) according to Claim 5 or 6, wherein the cap (10) has an opening (10a) for allowing the probe (127) inserted into the container main body (4) to pass through, and a surrounding part of the opening (10a) is structured to be engaged with a peripheral portion of an upper surface of the water absorptive member (8).

8. Pre-treatment equipment (100) comprising:
a liquid storage container installing portion (108) for installing the liquid storage container (2) according to any one of Claims 1 to 7, which stores liquid necessary for pre-treating a sample inside the liquid storage container (2);
the probe (127) for aspirating and dispensing the liquid from a tip;
a probe driving mechanism (126) which drives the probe (127) to collect the liquid necessary for the pre-treatment from the liquid storage container (2) installed on the liquid storage container installing portion (108) by using the probe (127); and
pre-treatment portions (130, 136a) for pre-treating the sample to which the liquid necessary for the pre-treatment is added by the probe (127).
